# FASCICULE DE BREVET EUROPEEN

(11) **EP 1 199 148 B1**
(45) Date de publication et mention de la délivrance du brevet: **01.10.2008**
(21) Numéro de dépôt: 01123735.1
(22) Date de dépôt: 04.10.2001
(51) Int. Cl.: B29C 47/00, B29C 47/32, B29D 30/44, B29D 30/60, B29C 47/22

(54) **Fabrication d'une bandelette par extrusion d'un tube puis aplatissement du tube**
Herstellung von Bändern durch Extrudieren von Rohren und danach Abflachen von diesen Rohren
Manufacturing a strip by extruding a tube and then flattening said tube

(30) Priorité: 18.10.2000 FR 0013424
(43) Date de publication de la demande: 24.04.2002
(73) Titulaire: Société de Technologie MICHELIN, 63000 Clermont-Ferrand (FR); MICHELIN Recherche et Technique S.A., 1763 Granges-Paccot (CH)
(72) Inventeur: Martin, Rémy, 63450 St-Saturnin (FR); Dailliez, Olivier, 63400 Chamalieres (FR)
(74) Mandataire: Bauvir, Jacques

(56) Documents cités:
- EP-A- 0 264 600
- EP-A- 0 690 229
- GB-A- 825 897
- GB-A- 903 794
- GB-A- 2 050 933
- US-A- 3 268 380
- US-A- 3 843 482

## Description

La présente invention se rapporte à la pose de produits en caoutchouc pour la fabrication de pneumatiques. Plus précisément, la présente invention concerne la fabrication d'un pneumatique par enroulage de bandelettes et elle se rapporte à la fabrication de produits semi-finis sous forme de bandelettes.

Il est déjà connu que, pour fabriquer un pneumatique en caoutchouc cru, la dépose de tout ou partie des produits en caoutchouc peut s'effectuer par enroulement d'une bandelette sur un support de fabrication. Par exemple, la demande de brevet EP 0 264 600 propose d'utiliser une extrusion de type volumétrique pour assurer la dépose des produits en caoutchouc avec une grande précision. La demande de brevet EP 0 690 229 propose une pompe volumétrique utilisée pour extruder en continu une bandelette de caoutchouc cru avec une grande précision.

Un problème bien connu dans l'industrie du pneumatique est que certains mélanges de caoutchoucs vulcanisables au soufre sont assez difficiles à extruder : le mélange a tendance à s'émietter, ne présente pas une surface lisse en aval de l'extrusion mais plutôt une surface granuleuse, bosselée, rugueuse, présentant parfois des amorces de déchirures. Il est difficile de conférer à de tels mélanges une forme précise et régulière comme une bandelette. Cela entraîne des difficultés de manipulation des produits semi-finis extrudés. Cela entraîne également des difficultés de dépose de tels produits sur une ébauche crue de pneumatique en cours de fabrication car le collant à cru de tels mélanges est en général mauvais.

Cela est tout particulièrement gênant pour la technique de bobinage d'une bandelette sur un support car, dans ce cas, les sections de caoutchouc extrudées sont assez faibles et il est important de pouvoir extruder des bandelettes à grande vitesse afin de pouvoir déposer les volumes nécessaires de caoutchouc dans un temps convenable. Or, en général, à formulation de mélange donnée, plus on accroît la vitesse d'extrusion et/ou de bobinage sur un support, plus les difficultés augmentent.

L'invention propose de former une bandelette en fabriquant d'abord un tube que l'on écrase par la suite.

Un premier aspect de l'invention concerne la dépose d'un constituant comprenant du caoutchouc cru au cours de la fabrication d'un pneumatique, la dépose étant effectuée par bobinage d'un ruban sur un support rotatif ayant une surface de réception, par un procédé comprenant les étapes suivantes :
- extruder du caoutchouc cru au travers d'une filière conférant au caoutchouc cru extrudé une section tubulaire, pour former un tube de caoutchouc dont la paroi délimite une cavité interne,
- aplatir la forme tubulaire et ainsi obtenir un ruban que l'on fait adhérer sur ladite surface de réception.

Un second aspect de l'invention concerne la fabrication d'un ruban en caoutchouc cru, avec ajout d'un constituant au ruban en aval d'une opération d'extrusion. Il peut s'agir d'ajouter des fibres. Il peut s'agir d'ajouter un additif, notamment un matériau capable de migrer dans du caoutchouc cru. Le procédé comprend les étapes suivantes :
- extruder du caoutchouc cru au travers d'une filière conférant au caoutchouc cru extrudé une section tubulaire, pour former un tube de caoutchouc cru dont la paroi délimite une cavité interne,
- concomitamment à l'extrusion, introduire un matériau à l'intérieur dudit tube, selon un dosage prédéfini,
- aplatir la forme tubulaire et ainsi obtenir un ruban.

Dans les exemples décrits ci-dessous, l'extrusion d'un tube de caoutchouc se fait grâce à une filière cylindrique contenant une olive elle aussi cylindrique et de taille légèrement plus petite de façon à laisser un entrefer de révolution entre la buse et l'olive. Il va de soit que la forme cylindrique n'est pas limitative, d'autres formes pouvant être envisagées, notamment une section ovale. La forme de révolution est cependant avantageuse pour l'usinage des pièces.

La suite décrit différentes applications possibles de l'invention, de façon non limitative, ce qui permet d'en saisir toute la portée et tous les avantages.
- La figure 1 est une coupe montrant une tête d'extrusion équipée d'une filière pour une première application de l'invention.
- La figure 2 montre schématiquement une machine d'extrusion en coopération avec un noyau rotatif servant de référence de fabrication pour un pneumatique, illustrant la première application de l'invention.
- La figure 3 est une section partielle selon III-III à la figure 1.
- La figure 4 est une section partielle selon IV-IV à la figure 1.
- La figure 5 est une section partielle par un plan de coupe contenant l'axe central d'une filière de révolution, montrant une variante de réalisation d'une filière dans la première application de l'invention.
- La figure 6 est un agrandissement d'une partie de la figure 5.
- La figure 7 est une section partielle par un plan de coupe contenant l'axe central d'une filière de révolution, montrant une autre variante de réalisation d'une filière dans la première application de l'invention.
- La figure 8 est un agrandissement d'une partie de la figure 7.
- La figure 9 illustre de façon isolée l'olive de la figure 7.
- La figure 10 montre des moyens utilisés pour presser une bandelette contre la surface de réception, dans la première application de l'invention.
- La figure 11 est une vue de gauche de la variante de réalisation illustrée à la figure 10, certains détails étant omis.
- La figure 12 est une vue partielle selon AA à la figure 10.
- La figure 13 est une vue partielle selon BB à la figure 10.
- La figure 14 illustre une deuxième application d'une filière selon l'invention.
- La figure 15 montre schématiquement un enroulement de bandelette obtenu avec l'invention.
- La figure 16 est un agrandissement d'une partie de la figure 15.
- La figure 17 montre une autre variante de réalisation d'une filière, utilisable aussi bien dans la première application que dans la deuxième application de l'invention.
- La figure 18 est un agrandissement d'une partie de la figure 17.
- La figure 19 montre ladite autre variante, dans un réglage différent.
- La figure 20 est un agrandissement d'une partie de la figure 19.
- La figure 21 montre schématiquement un enroulement de bandelette obtenu avec ladite autre variante l'invention.
- La figure 22 est un agrandissement d'une partie de la figure 21.

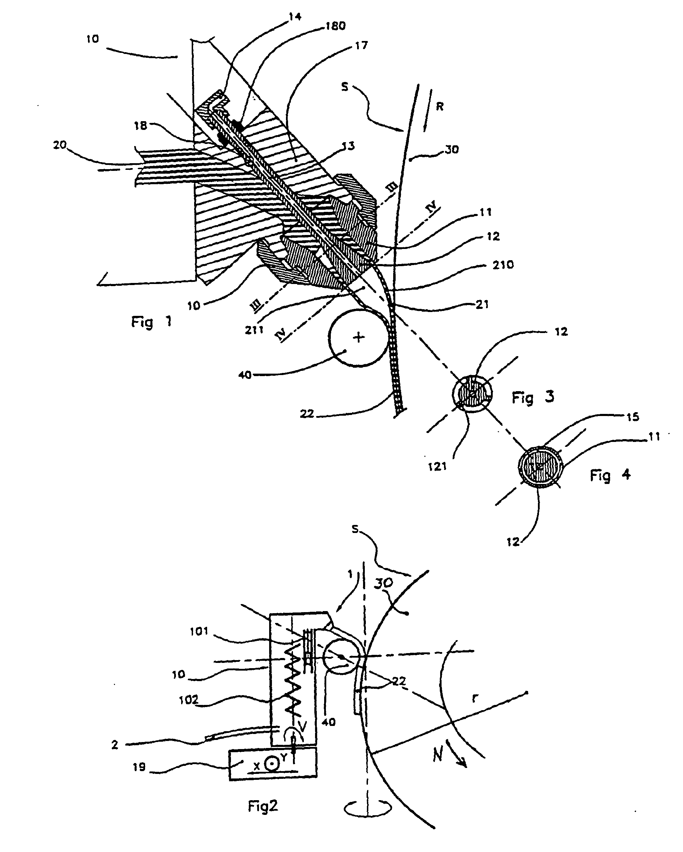

A la figure 2, on voit un noyau 30 de forme sensiblement toroïdale, constituant une référence pour la fabrication d'un pneumatique. Cette technique de fabrication est connue. Pour extruder du caoutchouc, on utilise une extrudeuse montée sur un robot de manipulation permettant toutes les positions relatives voulues entre ladite surface de réception et la filière, celle-ci étant positionnée en regard de la surface de réception pour une extrusion de la forme tubulaire au voisinage de la surface de réception, la forme tubulaire étant aplatie sur la surface de réception directement après extrusion.

L'invention s'étend à une machine de dépose d'un constituant comprenant du caoutchouc cru pour la fabrication d'un pneumatique, ladite machine effectuant un bobinage d'un ruban sur un support rotatif, ladite machine comprenant les éléments suivants :
- une extrudeuse équipée d'une filière 1 conférant à la section de caoutchouc cru extrudé une forme tubulaire,
- un support de révolution, rotatif, servant de référence pour la fabrication du pneumatique,
- un robot de manipulation 19 permettant toutes les positions relatives voulues entre ledit support de révolution et ladite filière,
- au moins un galet 40 coopérant avec le support rotatif pour aplatir la forme tubulaire sur celui-ci, en aval de ladite filière.

On voit une pompe 10 à caoutchouc cru constituant un exemple possible d'extrudeuse. La pompe 10 à caoutchouc cru est supportée par un robot de manipulation 19. La pompe à caoutchouc comporte essentiellement une vis de gavage 102, un ou plusieurs pistons 101 et une filière d'extrusion 1. A partir d'une bande de caoutchouc 2, la pompe permet de déposer une bandelette 22 sur à la surface S du noyau 30. Un galet 40 facilite la dépose. Le robot de manipulation 19 permet de rapprocher ou d'éloigner la filière d'extrusion 1 par rapport au noyau 30 selon l'axe X, de la déplacer transversalement selon l'axe Y, et permet également de faire tourner la pompe à caoutchouc autour de l'axe α. L'axe α passe sensiblement par l'endroit où la bandelette 22 rejoint la surface S.

La machine est placée sous le contrôle d'un automate qui permet de la piloter de façon appropriée. A titre d'illustration, on peut citer quelques paramètres dépendants les uns des autres et traités par l'automate : vitesse « V » de la vis 102, mécaniquement liée à la vitesse de fonctionnement du ou des piston(s) 101, rayon effectif de pose « r » (différent selon la zone du pneu -par exemple bourrelet ou bande de roulement-, ou différent d'un enroulement à l'autre en cas de superposition d'enroulements pour réaliser la bande de roulement), vitesse de rotation « N » du noyau 30. On utilise ici une extrudeuse volumétrique, le débit de caoutchouc cru extrudé étant contrôlé notamment en fonction de la vitesse de rotation de la surface de réception et du rayon de dépose du ruban.

A la figure 1, on voit plus en détail un premier mode de réalisation d'une filière 1 selon l'invention. Celle-ci comporte une préfilière 17 montée sur une pompe 10 à caoutchouc. Le galet 40 coopère avec le noyau 30 en aval de l'orifice d'extrusion, situé dans le plan IV-IV. Du caoutchouc cru 20 est refoulé sous pression par la pompe 10 à caoutchouc et parvient à la filière 1. La filière 1 comprend une buse 11 et une olive 12 fixée à la buse, et occultant partiellement l'orifice d'extrusion de façon à aménager un entrefer 15 entre la buse et l'olive, l'entrefer aboutissant à une section d'extrusion de forme appropriée.

Le caoutchouc est extrudé sous la forme d'un tube 21. Une partie 210 du tube 21 est proche de la surface de réception S et une autre partie en est plus éloignée. Le tube 21 est aplati par l'action du galet 40 coopérant avec le noyau 30, pour former une bandelette 22 par collage des parois du tube 21.

L'olive 12 est prolongée par une queue 18, montée dans un perçage ad hoc sur la préfilière 17, et maintenu par un écrou 180 s'opposant à une expulsion de l'olive 12 sous l'effet de la pression de refoulement du caoutchouc. On peut éventuellement prévoir des moyens d'éventation des gaz inclus à l'intérieur du tube 21. A cette fin, la queue 18 comporte une canalisation 13 terminée par un raccord 14 auquel on peut aisément brancher une tubulure appropriée. La canalisation 13 traverse l'olive 12 et débouche dans l'orifice d'extrusion. L'éventation peut éventuellement être assistée par une dépression. Mais l'éventation n'est pas indispensable car il n'y a pas accumulation de gaz au cours du fonctionnement de l'invention.

L'olive 12 comporte de façon avantageuse des ailes 121 radiales (voir figure 3) qui centrent l'olive 12 à l'intérieur de la buse 11. En variante, la position de l'olive à l'intérieur de la buse pourrait être réglable entre une position centrée et des positions excentrées, ce qui peut favoriser une extrusion non axisymétrique du tube 21.

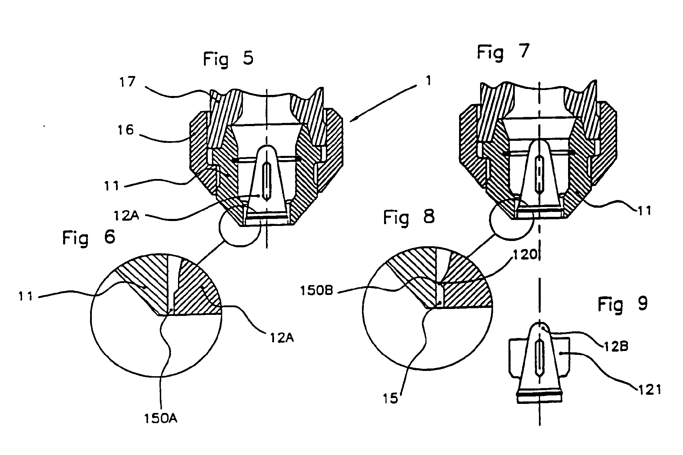

On voit à la figure 1 que l'olive 12 forme avec la buse 11 un convergeant jusqu'à l'orifice d'extrusion. Autrement dit, l'entrefer 15 est de taille minimale au niveau de l'orifice d'extrusion (voir aussi 150A à la figure 6).

On peut adapter très aisément l'outillage proposé par la présente invention à différentes tailles de bandelettes que l'on a à réaliser. Il n'est pas toujours possible d'agir sur le pilotage de l'extrusion pour passer d'une bandelette petite à une bandelette plus grosse. Aux variantes représentées aux figures 5 à 9, on peut très facilement remplacer la filière d'extrusion car celle-ci est montée par l'intermédiaire d'une bague 16 sur la préfilière 17 et accessible du côté de l'orifice d'extrusion. On peut très facilement, en dévissant la bague 16, remplacer l'ensemble constitué par la buse 11 et l'olive 12A ou 12B.

Lors des opérations d'extrusion de caoutchouc cru, il est bien connu que l'on a parfois inclusion de corps plus solides ou de caoutchouc dont la vulcanisation peut avoir débuté. C'est pour cela que l'on prévoit souvent des filtres en amont de l'orifice d'extrusion. L'inconvénient de tels filtres est qu'ils introduisent une perte de charge importante. Dans la variante de réalisation représentée aux figures 7, 8 et 9, on propose de réaliser avantageusement la valeur minimale de l'entrefer 150B en amont de l'orifice d'extrusion. De la sorte, si un corps solide quelconque devait être arrêté au niveau de l'entrefer 150B, le caoutchouc cru qui passe au-delà de l'entrefer 150B a la possibilité de former à nouveau un anneau continu avant d'atteindre l'orifice d'extrusion proprement dit. Cette disposition agit comme un filtre, cependant avec une perte de charge bien moindre.

On voit en détail à la figure 8 que l'olive comporte un anneau formant un bossage 120 en amont de l'extrémité qui est au droit de l'orifice d'extrusion. Par ailleurs, l'olive 12B comporte, comme déjà signalé, des ailes 121 qui permettent de la centrer. La distance entre le bossage 120 et l'orifice d'extrusion est suffisante pour qu'un anneau continu se reforme en aval de toute impureté bloquée à l'entrefer 150B, ce qui au besoin se détermine expérimentalement.

Parmi les avantages de l'invention, citons que cette technique d'extrusion ne présente pas d'effet de bord. Les bandelettes ainsi réalisées sont moins sensibles au déchirement qui s'amorce souvent à un bord. C'est tout particulièrement intéressant pour certains mélanges de caoutchouc. Par ailleurs, grâce à l'utilisation de l'invention, on maintient une bonne qualité de l'état de la surface intérieure et extérieure du tube 21, gage d'un bon pouvoir collant à l'état cru de la bandelette formée ensuite par aplatissement.

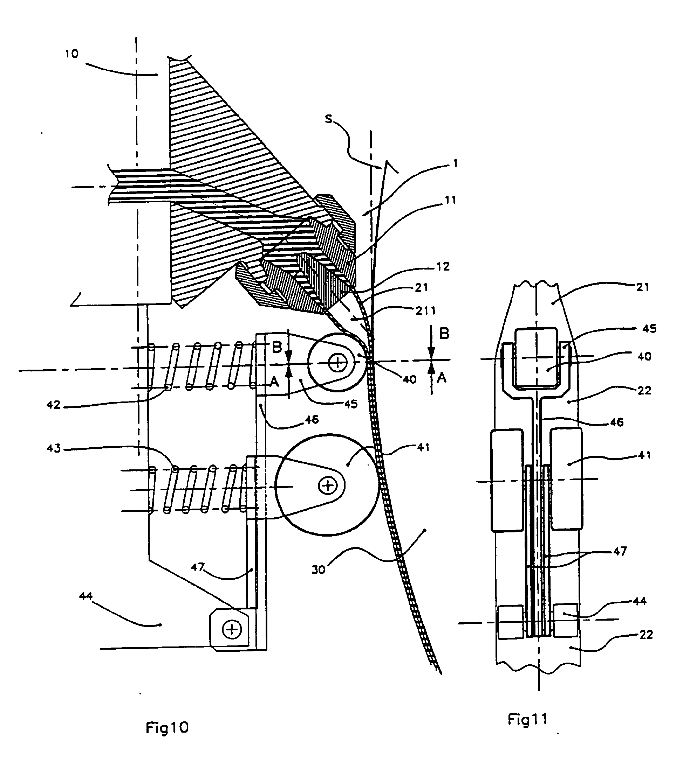

Les figures 10 et 11 illustrent plus en détail un rouletage que l'on peut effectuer en aval de l'orifice d'extrusion proprement dit. On reconnaît le noyau 30 et la surface de réception S. On voit également la filière 1, comportant une buse 11 à l'intérieur de laquelle on a monté une olive 12. Un galet 40 est monté sur une chape 45 elle-même supportée par un bras 46 articulé à un support 44. Le support 44 est solidaire de la pompe 10 à caoutchouc. Un ressort 42 agit entre le support 44 et le galet 40. Le galet 40 exerce ainsi une pression contrôlée vers le noyau 30. On voit également deux galets auxiliaires 41 montés chacun sur un flasque 48. Chacun des flasques 48 est monté sur un bras 47, articulé sur le support 44. Des ressorts 43 agissent entre chacun des bras 47 et le support 44, pour une fonction comparable à celle du ressort 42.

Il est en effet avantageux d'avoir un bon rouletage, réalisé ici par trois galets indépendants, à savoir les galet 40 et galets auxiliaires 41, appliquant des efforts sensiblement radiaux, d'intensité bien contrôlée, choisie expérimentalement, éventuellement réglable. Il est avantageux d'avoir des ressorts de grande flexibilité afin d'exercer un effort du rouletage sensiblement constant, même en cas de faux rond ou d'imperfection locale dans la dépose du caoutchouc. Le galet 40 effectue un premier écrasement du tube 21 qui vient d'être extrudé par la filière 1, ce qui positionne et colle sur la surface de réception S la partie médiane de la bandelette 22. Les galets auxiliaires 41 plaquent les bords de la bandelette 22 sur la surface de réception S.

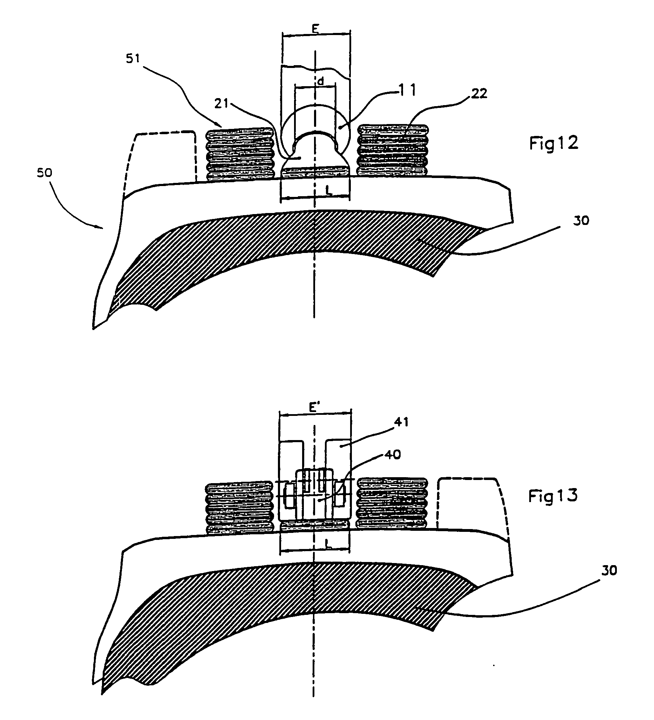

Les figures 12 et 13 permettent de bien comprendre un avantage de l'invention. Pour différentes raisons parmi lesquelles on peut citer la grande précision de pose du caoutchouc, il est souhaitable que la tête de la pompe 10 à caoutchouc soit positionnée aussi proche que possible de l'endroit où l'on veut déposer le caoutchouc sur l'ébauche de pneumatique en cours de fabrication. Cependant, les extrudeuses utilisées pour la dépose de bandelettes de caoutchouc sont relativement volumineuses. La section classiquement extrudée étant rectangulaire, dans les dispositifs conventionnels, la filière qui permet de profiler la bandelette de pneumatique présente un encombrement qui est nécessairement supérieur à la section de la bandelette de caoutchouc que l'on veut déposer.

L'invention propose donc une filière d'extrusion plus étroite que la bandelette à extruder. En consultant les figures 12 et 13, on voit bien que l'on passe d'un tube 21 d'un diamètre « d » donné à une bandelette 22 dont la largeur « L » est supérieure au diamètre du tube 21, et est sensiblement comparable à l'encombrement « E » de la filière 1.

Par ailleurs, il est souhaitable que le schéma de dépose des bandelettes respecte autant que possible la forme de moulage du pneumatique. Par exemple, pour certaines bandes de roulement, on souhaite que la section globale de caoutchouc cru s'approche autant que possible de la sculpture finale du pneumatique, pour éviter ou limiter les mouvements de caoutchouc pendant le moulage. On est ainsi conduit par exemple à déposer des piles de rubans pour former des nervures circonférentielles séparées par de petites rainures. Le problème qui se pose est que la tête de la pompe 10 à caoutchouc, c'est-à-dire la filière qui profile le caoutchouc, de par son encombrement, peut heurter le caoutchouc cru qui a été déposé pour former la nervure circonférentielle adjacente.

La figure 12 est une vue dans la direction des flèches AA à la figure 10, le galet 40 n'étant pas représenté. On aperçoit la buse 11 grâce à laquelle on extrude un tube de caoutchouc cru. Le tube 21 est transformé en bandelette 22 par aplatissement. Comme on l'a déjà souligné, la bandelette 22 est d'une largeur « L » supérieure au diamètre « d » du tube 21. Grâce à l'invention, on voit qu'il est possible de déposer, sur une ébauche de pneumatique 50 en cours de fabrication, des bandelettes 22 pour former par superposition des nervures de caoutchouc 51 sans être gêné par les empilages réalisés à une position transversale décalée. La figure 13 est une vue dans la direction des flèches BB à la figure 10. Elle permet de comprendre que même le dispositif de rouletage à trois galets 40 et 41 proposé par l'invention est d'un encombrement voisin de la largeur de la bandelette 22. Le chariot de rouletage (portant les galets 40 et 41) pénètre facilement entre les cordons de caoutchouc cru.

D'autres applications de l'invention sont possibles. On peut envisager d'injecter à l'intérieur du volume emprisonné dans le tube 21 un autre produit comme par exemple un système de vulcanisation, ou des fibres de renforcement.

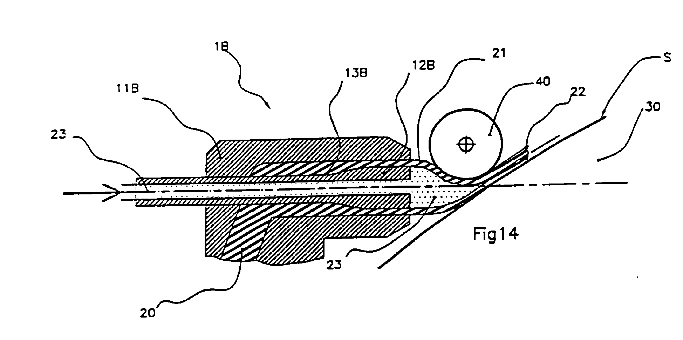

La figure 14 illustre une application de l'invention à l'ajout d'un matériau à l'intérieur du tube 21, de façon à compléter la composition de caoutchouc vulcanisable. Il peut s'agir par exemple du système de vulcanisation, et/ou de tout additif approprié. On sait que certains constituants peuvent migrer dans le caoutchouc cru, de sorte qu'un tel ajout n'est pas incompatible avec une bonne homogénéité. Cet ajout est effectué au moment de la pose de la bandelette 22, dans un procédé de dépose d'un constituant comprenant du caoutchouc cru au cours de la fabrication d'un pneumatique, la dépose étant effectuée par bobinage d'un ruban sur un support rotatif ayant une surface de réception S, le ruban étant fabriqué comme indiqué ci-dessus. On peut cependant envisager de réaliser de cette façon un semi-fini.

On voit que la filière 1B comporte une buse 11B et une olive 12B. L'olive 12B comporte une canalisation 13B qui traverse l'olive 12B et débouche dans l'orifice d'extrusion. Des moyens appropriés permettent d'introduire un matériau 23 à l'intérieur du tube 21. Une certaine quantité de matériau 23 est ainsi ajoutée en continu au caoutchouc cru en même temps que l'on forme une bandelette 22 et qu'on l'applique sur le support de fabrication 30. L'automate de contrôle de la machine selon l'invention assure bien entendu le respect de proportion maîtrisée entre le matériau 23 et le caoutchouc 20 extrudé. Ces proportions ne sont pas nécessairement constantes. Le dosage du matériau 23 peut être variable, la proportion étant ajustée en fonction de la localisation où l'on dépose la bandelette 22 dans le pneumatique.

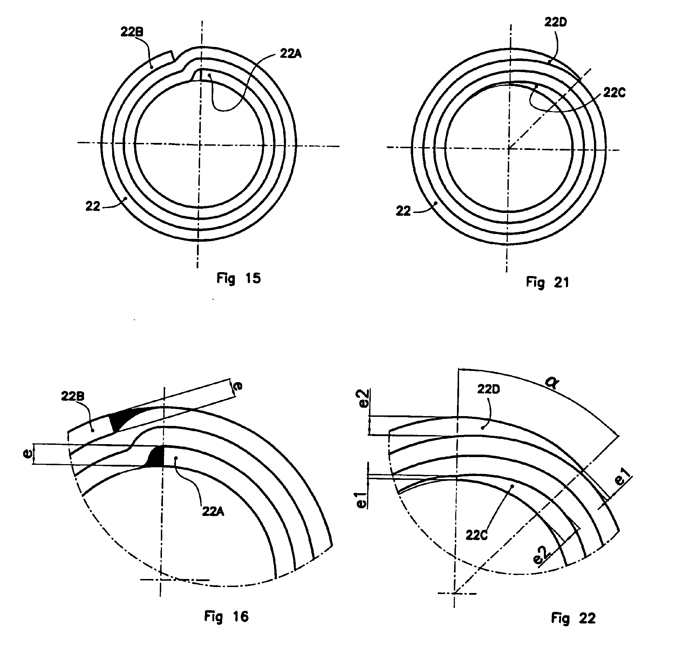

Les figures 15 et 16 illustrent le résultat obtenu lorsque l'on superpose trois tours complets d'une bandelette 22 enroulée sur un support de révolution tel qu'un noyau rotatif servant de référence de fabrication pour un pneumatique. On constate une non-homogénéité (d'autant plus importante que l'épaisseur « e » de la bandelette est importante) à l'azimut de pose du début 22A de la bandelette, qu'il est assez difficile de masquer même en positionnant correctement l'azimut de la fin 22B de la bandelette.

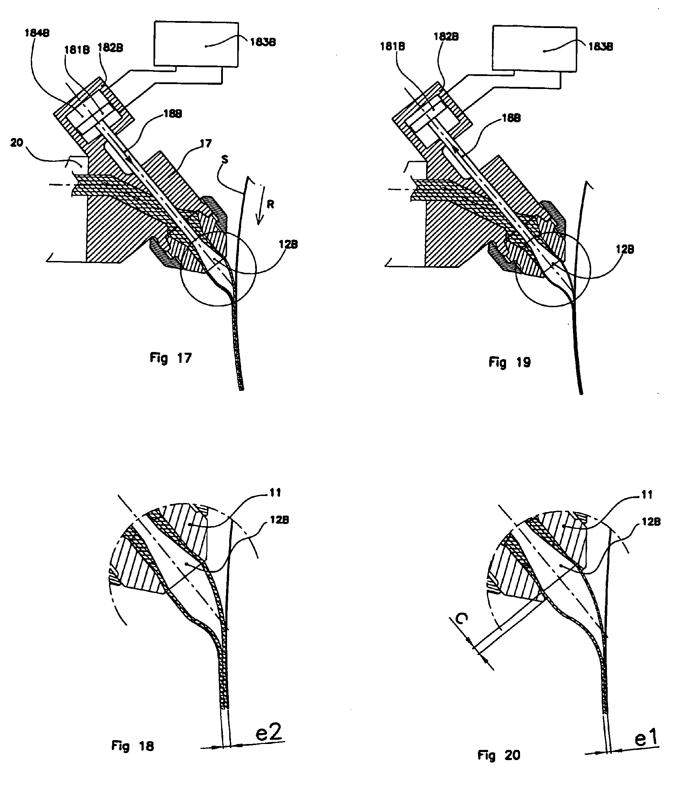

Afin de s'affranchir de cette difficulté, il est souhaitable de pouvoir réaliser des départs et arrêts de pose à épaisseur de bandelette variable. Les figures 17 à 20 illustrent une autre variante de l'invention qui permet justement de réaliser cela. A cette fin, on fait varier l'épaisseur de ladite paroi du tube de caoutchouc pour obtenir une variation d'épaisseur de la bandelette.

On voit à la figure 17 que l'olive 12B est prolongée par une queue 18B, montée dans un perçage ad hoc sur la préfilière 17. La queue 18B pénètre dans un cylindre 182B et est terminée par un disque 181B formant un piston coulissant dans ledit cylindre 182B. Un dispositif de commande de déplacement 183B permet d'agir sur la position relative de la queue 18B par rapport à la préfilière 17, par exemple en injectant ou en retirant une quantité déterminée d'huile dans la chambre 184B. Ainsi, la position de l'olive 12B à l'intérieur de la buse 11 (figure 18) est réglable dans un sens parallèle au flux de caoutchouc cru dans l'entrefer. Par ailleurs, juste en amont de l'orifice d'extrusion, la buse 11 et l'olive 12B comportent une surface tronconique. De cette façon, en agissant sur la position relative de l'olive 12B dans la buse 11, on fait varier l'épaisseur de l'entrefer et, par voie de conséquence, l'épaisseur du tube de caoutchouc extrudé.

La figure 18 montre l'extrusion d'un tube dont les parois sont d'épaisseur telle que, une fois applati contre le support S, on obtient une bandelette d'épaisseur « e2 » pour la position de l'olive 12B illustrée aux figures 17 et 18. Aux figures 19 et 20, on voit une autre position de l'olive 12B, plus à l'intérieur de la buse 11. Dans la configuration de ces organes telle que dessinée, l'entrefer est plus petit. Une fois le tube applati contre le support S, on obtient une bandelette d'épaisseur « e1 » plus petite. Notons que la largeur de la bandelette extrudée, qui dépend principalement du diamètre « d » du tube, est sensiblement indépendante de l'épaisseur.

En faisant varier progressivement ladite épaisseur, bien entendu en synchronisme avec le volume extrudé et la rotation du support S, on peut obtenu un départ 22C et un arrêt 22D de la bandelette s'étendant sur un arc α plus ou moins important, comme illustré aux figures 21 et 22. L'invention a été illustré pour des poses de bandelette en spirale. L'invention est également utile pour des poses de bandelette en hélice, et plus généralement pour toute forme de dépose d'un produit caoutchouc par extrusion directe sur un support en fabrication de pneumatiques.

## Revendications

1. Procédé de dépose d'un constituant comprenant du caoutchouc cru au cours de la fabrication d'un pneumatique, la dépose étant effectuée par bobinage d'un ruban sur un support rotatif ayant une surface de réception (S), comprenant les étapes suivantes :
• extruder du caoutchouc cru (20) au travers d'une filière (1) conférant au caoutchouc cru extrudé une section tubulaire, pour former un tube de caoutchouc (21) dont la paroi délimite une cavité interne (211),
• aplatir la forme tubulaire et ainsi obtenir un ruban (22) que l'on fait adhérer sur ladite surface de réception (S).

2. Procédé selon la revendication 1, utilisant pour extruder du caoutchouc une extrudeuse montée sur un robot de manipulation permettant toutes les positions relatives voulues entre ladite surface de réception et la filière, celle-ci étant positionnée en regard de la surface de réception pour une extrusion de la forme tubulaire au voisinage de la surface de réception, la forme tubulaire étant aplatie sur la surface de réception directement après extrusion.

3. Procédé selon la revendication 2, utilisant une extrudeuse volumétrique, le débit de caoutchouc cru extrudé étant contrôlé en fonction de la vitesse de rotation de la surface de réception et du rayon de dépose du ruban.

4. Procédé selon l'une des revendications 1 à 3, dans lequel des gaz inclus à l'intérieur du tube sont évacué par des moyens d'éventation.

5. Procédé selon l'une des revendications 1 à 4, dans lequel on fait varier l'épaisseur de ladite paroi du tube de caoutchouc (21).

6. Procédé selon l'une des revendications 1 à 5 dans lequel, concomitamment à l'étape d'extrusion du tube (21), on introduit un matériau à l'intérieur dudit tube (21) , selon un dosage prédéfini,

7. Procédé selon la revendication 6, dans lequel le dosage du matériau est variable, en fonction de la localisation de la dépose dans le pneumatique.

8. Procédé selon la revendication 6 ou 7, utilisant pour extruder du caoutchouc une extrudeuse montée sur un robot de manipulation permettant toutes les positions relatives voulues entre ladite surface de réception et la filière, celle-ci étant positionnée en regard de la surface de réception pour une extrusion de la forme tubulaire au voisinage de la surface de réception, la forme tubulaire étant aplatie sur la surface de réception directement après extrusion.

9. Procédé selon l'une des revendications 6 à 8, utilisant une extrudeuse volumétrique, le débit de caoutchouc cru extrudé étant contrôlé en fonction de la vitesse de rotation de la surface de réception et du rayon de dépose du ruban.

10. Procédé selon l'une des revendications 6 à 9, dans lequel on fait varier l'épaisseur de ladite paroi du tube de caoutchouc (21).

11. Procédé selon l'une des revendications 1 à 10, dans lequel la surface de réception (S) est formée par l'ébauche crue d'un pneumatique en cours de fabrication.

12. Machine de dépose d'un constituant comprenant du caoutchouc cru pour la fabrication d'un pneumatique, ladite machine effectuant un bobinage d'un ruban sur un support rotatif, ladite machine comprenant les éléments suivants :
• une extrudeuse équipée d'une filière (1) conférant à la section de caoutchouc cru extrudé une forme tubulaire,
• un support de révolution, rotatif, servant de référence pour la fabrication du pneumatique,
• un robot de manipulation (19) permettant toutes les positions relatives voulues entre ledit support de révolution et ladite filière,
• au moins un galet (40) coopérant avec le support rotatif pour aplatir la forme tubulaire sur celui-ci, en aval de ladite filière.

13. Machine selon la revendication 12, dans laquelle ladite extrudeuse est une extrudeuse à pistons (101).

14. Machine selon l'une des revendications 12 ou 13, dans laquelle ladite filière (1) comprend une buse (11) ayant un orifice d'extrusion et une olive (12) fixée à ladite buse et occultant partiellement l'orifice d'extrusion de façon à aménager un entrefer (15) entre la buse et l'olive, l'entrefer aboutissant à une section d'extrusion de forme appropriée.

15. Machine selon la revendication 14, dans laquelle la position de l'olive à l'intérieur de la buse est réglable entre une position centrée et des positions excentrées.

16. Machine selon l'une des revendications 14 ou 15, dans laquelle l'entrefer atteint une taille minimale en amont de l'orifice d'extrusion.

17. Machine selon l'une des revendications 14 à 16, dans laquelle une canalisation traverse l'olive et débouche dans l'orifice d'extrusion, comportant des moyens pour introduire un matériau à l'intérieur de ladite forme tubulaire.

18. Machine selon l'une des revendications 14 à 17, dans laquelle la buse (11) et l'olive (12) comportent une surface tronconique et dans laquelle la position de l'olive à l'intérieur de la buse est réglable dans un sens parallèle au flux de caoutchouc cru dans l'entrefer.

## Claims

1. A process for laying a component comprising uncured rubber during the manufacture of a tire, the laying being effected by winding a band on to a rotary support having a receiving surface (S), comprising the following steps:
• extruding uncured rubber (20) through a die (1) imparting a tubular section to the extruded uncured rubber, to form a rubber tube (21), the wall of which defines an internal cavity (211),
• flattening the tubular form and thus obtaining a band (22) which is glued to said receiving surface (S).

2. A process according to Claim 1, using to extrude rubber an extruder which is mounted on a manipulating robot which permits all the relative positions desired between said receiving surface and the die, the latter being positioned opposite the receiving surface for extruding the tubular form in the vicinity of the receiving surface, the tubular form being flattened on the receiving surface directly after extrusion.

3. A process according to Claim 2, using a volumetric extruder, the flow rate of uncured rubber extruded being controlled as a function of the speed of rotation of the receiving surface and of the radius of lay of the band.

4. A process according to one of Claims 1 to 3, in which gases included in the tube are evacuated by venting means.

5. A process according one of Claims 1 to 4, in which the thickness of said wall of the rubber tube (21) is varied.

6. A process according one of claims 1 to 5 in which concomitantly with the step of extruding the tube (21), a material is introduced into said tube (21), in a predefined amount.

7. A process according to Claim 6, in which the metering of the material is variable, as a function of the location of laying in the tire.

8. A process according to Claim 6 or 7, using to extrude rubber an extruder which is mounted on a manipulating robot which permits all the relative positions desired between said receiving surface and the die, the latter being positioned opposite the receiving surface for extruding the tubular form in the vicinity of the receiving surface, the tubular form being flattened on the receiving surface directly after extrusion.

9. A process according to one of Claims 6 to 8, using a volumetric extruder, the flow rate of uncured rubber extruded being controlled as a function of the speed of rotation of the receiving surface and of the radius of lay of the band.

10. A process according to one of Claims 6 to 9, in which the thickness of said wall of the rubber tube (21) is varied.

11. A process according one of claims 1 to 10 in which the receiving surface (S) is formed by the surface of a tire blank which is being manufactured,

12. A machine for laying a component comprising uncured rubber for the manufacture of a tire, said machine winding a band on a rotary support, said machine comprising the following elements:
• an extruder equipped with a die (1) imparting a tubular form to the section of extruded uncured rubber,
• a rotary support of revolution, serving as a reference for the manufacture of the tire,
• a manipulating robot (19) which permits all the desired relative positions between said support of revolution and said die,
• at least one roller (40) cooperating with the rotary support to flatten the tubular form onto it, downstream of said die.

13. A machine according to Claim 12, in which said extruder is a piston extruder (101).

14. A machine according to Claim 12 or 13, in which said die (1) comprises a nozzle having an extrusion orifice (11) and an ovoid (12) fastened to said nozzle and partially blocking off the extrusion orifice so as to provide an air gap (15) between the nozzle and the ovoid, the air gap ending in an extrusion section of appropriate form.

15. A machine according to Claim 14, in which the position of the ovoid within the nozzle is adjustable between a centered position and eccentric positions.

16. A machine according to Claim 14 or 15, in which the air gap reaches a minimum size upstream of the extrusion orifice.

17. A machine according to one of Claims 14 to 16, in which a pipe passes through the ovoid and opens into the extrusion orifice, comprising means for introducing a material into said tubular form.

18. A machine according to one of Claims 14 to 17, in which the nozzle (11) and the ovoid (12) comprise a frustoconical surface and in which the position of the ovoid within the nozzle is adjustable in a direction parallel to the flow of uncured rubber in the air gap.

## Patentansprüche

1. Verfahren zur Ablage eines Rohkautschuk aufweisenden Bestandteils während der Herstellung eines Reifens, wobei die Ablage durch Aufwickeln eines Bandes auf einen rotierenden Träger, der eine Aufnahmefläche (S) aufweist, durchgeführt wird, welches die folgenden Schritte beinhaltet:
- Extrudieren des Rohkautschuks (20) durch ein Mundstück (1) hindurch, das dem extrudierten Rohkautschuk einen rohrförmigen Querschnitt verleiht, um ein Kautschukrohr (21) zu formen, dessen Wand einen inneren Hohlraum (211) begrenzt,
- Abflachen der Rohrform und auf diese Weise Erhalten eines Bandes (22), welches man zum Anhaften auf der Aufnahmefläche (S) bringt.

2. Verfahren nach Anspruch 1, wobei zum Extrudieren des Kautschuks ein Extruder verwendet wird, der an einem Handhabungsroboter angebracht ist, welcher alle gewünschten relativen Positionen zwischen der Aufnahmefläche und dem Mundstück ermöglicht, wobei dieses gegenüber der Aufnahmefläche positioniert wird, für eine Extrusion der Rohrform in der Nähe der Aufnahmefläche, wobei die Rohrform auf der Aufnahmefläche unmittelbar nach der Extrusion abgeflacht wird.

3. Verfahren nach Anspruch 2, das einen volumetrischen Extruder verwendet, wobei der Durchsatz des extrudierten Rohkautschuks in Abhängigkeit von der Rotationsgeschwindigkeit der Aufnahmefläche und vom Ablageradius des Bandes gesteuert wird.

4. Verfahren nach einem der Ansprüche 1 bis 3, wobei Gase, die im Inneren des Rohres eingeschlossen sind, durch Entlüftungsmittel evakuiert werden.

5. Verfahren nach einem der Ansprüche 1 bis 4, wobei man die Dicke der Wand des Kautschukrohres (21) variieren lässt.

6. Verfahren nach einem der Ansprüche 1 bis 5, wobei gleichzeitig mit dem Schritt der Extrusion des Rohres (21) ein Material gemäß einer vordefinierten Dosierung in das Innere des Rohres (21) eingeführt wird.

7. Verfahren nach Anspruch 6, wobei die Dosierung des Materials in Abhängigkeit von der Stelle der Ablage im Reifen variabel ist.

8. Verfahren nach Anspruch 6 oder 7, wobei zum Extrudieren des Kautschuks ein Extruder verwendet wird, der an einem Handhabungsroboter angebracht ist, welcher alle gewünschten relativen Positionen zwischen der Aufnahmefläche und dem Mundstück ermöglicht, wobei dieses gegenüber der Aufnahmefläche positioniert wird, für eine Extrusion der Rohrform in der Nähe der Aufnahmefläche, wobei die Rohrform auf der Aufnahmefläche unmittelbar nach der Extrusion abgeflacht wird.

9. Verfahren nach einem der Ansprüche 6 bis 8, das einen volumetrischen Extruder verwendet, wobei der Durchsatz des extrudierten Rohkautschuks in Abhängigkeit von der Rotationsgeschwindigkeit der Aufnahmefläche und vom Ablageradius des Bandes gesteuert wird.

10. Verfahren nach einem der Ansprüche 6 bis 9, wobei man die Dicke der Wand des Kautschukrohres (21) variieren lässt.

11. Verfahren nach einem der Ansprüche 1 bis 10, wobei die Aufnahmefläche (S) vom Rohling eines in der Herstellung begriffenen Reifens gebildet wird.

12. Maschine zur Ablage eines Rohkautschuk aufweisenden Bestandteils für die Herstellung eines Reifens, wobei die Maschine ein Aufwickeln eines Bandes auf einem rotierenden Träger durchführt, wobei die Maschine die folgenden Elemente aufweist:
- einen Extruder, der mit einem Mundstück (1) ausgestattet ist, das dem Querschnitt von extrudiertem Rohkautschuks eine Rohrform verleiht;
- einen rotierenden Rotationsträger, der als Bezugsbasis für die Herstellung des Reifens dient,
- einen Handhabungsroboter (19), der alle gewünschten relativen Positionen zwischen dem Rotationsträger und dem Mundstück ermöglicht,
- mindestens eine Rolle (40), die mit dem rotierenden Träger zusammenwirkt, um die Rohrform auf diesem nach dem Austritt aus dem Mundstück abzuflachen.

13. Maschine nach Anspruch 12, wobei der Extruder ein Kolbenextruder (101) ist.

14. Maschine nach einem der Ansprüche 12 oder 13, wobei das Mundstück (1) eine Düse (11) mit einer Extrusionsöffnung und einen Düsenkern (12) aufweist, der an der Düse befestigt ist und die Extrusionsöffnung teilweise versperrt, so dass ein Luftspalt (15) zwischen der Düse und dem Düsenkern geschaffen wird, wobei der Luftspalt zu einem Extrusionsquerschnitt von geeigneter Form führt.

15. Maschine nach Anspruch 14, wobei die Position des Düsenkerns im Inneren der Düse zwischen einer zentrierten Position und dezentrierten Positionen einstellbar ist.

16. Maschine nach einem der Ansprüche 14 oder 15, wobei der Luftspalt stromaufwärts der Extrusionsöffnung eine minimale Größe erreicht.

17. Maschine nach einem der Ansprüche 14 bis 16, wobei ein Kanal den Düsenkern durchquert und in die Extrusionsöffnung mündet, der Mittel zum Einführen eines Materials in das Innere der Rohrform aufweist.

18. Maschine nach einem der Ansprüche 14 bis 17, wobei die Düse (11) und der Düsenkern (12) eine kegelstumpfförmige Fläche aufweisen und wobei die Position des Düsenkerns im Inneren der Düse in einer Richtung einstellbar ist, die zum Fluss des Rohkautschuks in dem Luftspalt parallel ist.
